# EUROPÄISCHE PATENTSCHRIFT

(11) **EP 2 300 312 B1**
(45) Veröffentlichungstag und Bekanntmachung des Hinweises auf die Patenterteilung: **14.11.2012**
(21) Anmeldenummer: 08786520.0
(22) Anmeldetag: 28.07.2008
(51) Int. Cl.: B64B 1/58

(54) **SEGMENTIERTES LUFTFAHRZEUG MIT ENERGIEMEDIUM**
SEGMENTED AIRCRAFT COMPRISING AN ENERGY MEDIUM
AÉRONEF SEGMENTÉ À FLUIDE ÉNERGÉTIQUE

(30) Priorität: 11.07.2008 DE 102008002939
(43) Veröffentlichungstag der Anmeldung: 30.03.2011
(73) Patentinhaber: Kroeplin, Bernd Helmut, 10719 Berlin (DE)
(72) Erfinder: Kroeplin, Bernd Helmut, 10719 Berlin (DE)
(74) Vertreter: Wablat Lange Karthaus
(86) Internationale Anmeldenummer: PCT/EP2008/059879
(87) Internationale Veröffentlichungsnummer: WO 2010/003468

(56) Entgegenhaltungen:
- DE-A1- 10 053 775
- US-A- 2 451 815

## Beschreibung

Die Erfindung betrifft ein segmentiertes Luftfahrzeug mit Gaszellen.

Es ist bekannt, dass Luftfahrzeuge gemäß DE100 53 775 A1 getrennte Gaszellen in miteinander verbundenen Hüllensegmenten aufweisen, welche ein leichter als Luft Auftriebsmedium, wie etwa Helium, beinhalten.

Weiterhin ist aus US 2 451 815 A ein Luftschiff (Air Ship) bekannt, in welchem in einem starren Grundkörper Gaszellen angeordnet sind, die sich über Teilbereiche des Luftschiffvolumens erstrecken und nicht miteinander verbunden sind.

Aufgabe der Erfindung ist es, das Luftfahrzeug mit dem mitgeführten Gas als Antriebsgas zu betreiben.

Zur Lösung dieser Aufgabe wird ein segmentiertes Luftfahrzeug vorgeschlagen, welches die in Anspruch 1 und - in Weiterbildung - in den Unteransprüchen genannten Merkmale aufweist.

Anstatt getrennte Gaszellen und Hüllensegmente und dadurch getrennte Volumina, wird eine segmentierte Bauweise mit zusammenhängendem Volumen geschaffen und das entstehende Volumen mit einem gasförmigen etwa luftschweren Energiemedium gefüllt, um damit das segmentierte Luftfahrzeug zu betreiben. Durch zu verschließende und zu öffnende Schotten zu den Gaszellen, können die zusammenhängenden Volumina geändert werden

Die konstruktiv gegenüber dem Stand der Technik geänderte Bauweise sowie die Verwendung eines angepassten Energiemediums für das Luftfahrzeug, löst das Problem durch miteinander verbundene Gaszellen und/oder einer durchgehenden Gaszelle mit einem gasförmigen etwa luftschweren Energiemedium darin. An den Segmenten können exzentrisch angebrachte regelbare Antriebe mit Energie versorgt werden, woraus durch den so erzeugten Schub mit Hilfe der druckbeaufschlagten Hülle genügend dynamischer Auftrieb resultiert, womit die vorgeschlagene Erfindung mit einer definierten Nutzlast stabil und steuerbar fliegt.

Die mit der Erfindung erzielten Vorteile bestehen insbesondere darin, dass damit sowohl Hüllenmaterial als auch Tanks für die Energieversorgung eingespart werden, die Strukturmasse sinkt und dadurch das Luftfahrzeug im Vergleich insgesamt kleiner ausfällt aber mittels dynamischem Auftrieb dennoch stabil und steuerbar fliegt.

Die Erfindung ist anschließend beispielhaft unter Bezugnahme auf die beigefügten schematischen Zeichnungen näher beschrieben. Es zeigen:
- Figur 1: ein erstes Ausführungsbeispiel eines segmentierten Luftfahrzeugs mit Energiemedium in seitlicher Schnitt-Ansicht.
- Figur 2: das Ausführungsbeispiel gemäß Fig. 1 in Draufsicht.

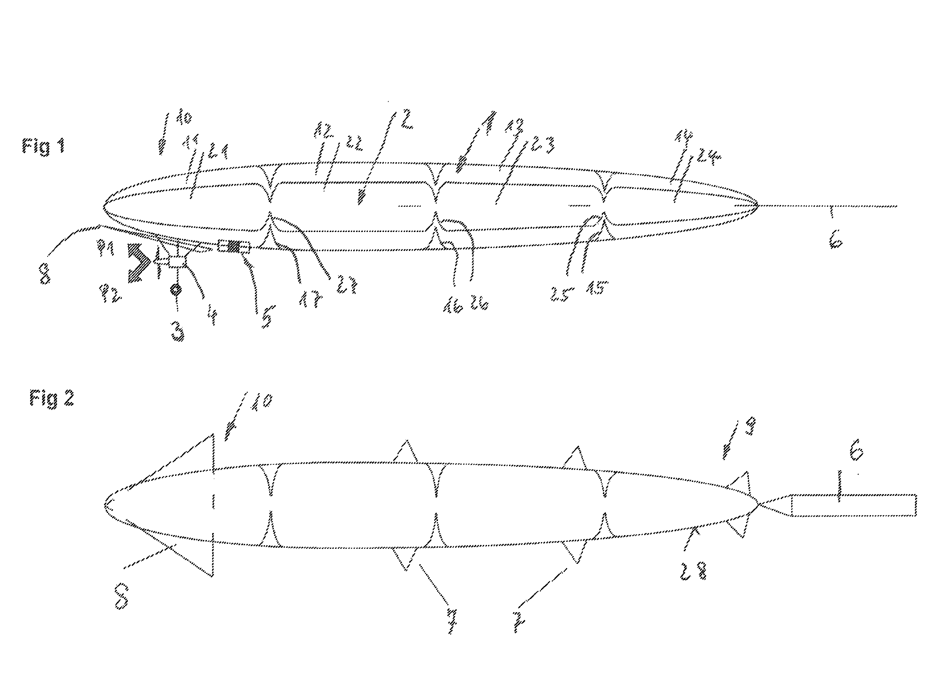

Figur 1 zeigt ein bevorzugtes Ausführungsbeispiel eines segmentierten Luftfahrzeugs, gefüllt mit einem Energiemedium in der Seitenansicht / Schnitt. Innerhalb von segmentierten miteinander verbundenen Luftzellen 1,11-14 in der Hülle 28 des Luftfahrzeugs befinden sich segmentierte miteinander verbundene Gaszellen 2, 21-24. Die Gaszellen 2, 21 -24 sind durch konstruktive Einschnürungen 25 - 27 innerhalb der Luftzellen 1, 11 - 14 mit gegenüberliegenden angebrachten Einschnürungen 15-17 ausgebildet. Sie sind mit beispielsweise Kraftgas (eine Propan-Butan-Mischung) als Energiemedium gefüllt und versorgen einen Antrieb 4 mit Energie, welcher unter dem Kopfsegment 10 des Luftfahrzeugs angebracht ist und exzentrisch angebrachte Schuberzeuger, beispielsweise ein Propellerpaar, antreibt, wodurch ein Vektorschub entsprechend den dargestellten Pfeilen P1, P2 und andere Richtungen erzeugbar ist. Der Lüfter 5 erzeugt einen Überdruck des durch die Hülle 28 eingeschlossenen Volumens, wodurch das segmentierte Luftfahrzeug eine flexible Formstabilität aufweist und in Zusammenwirken mit dem Vektorschub P1, P2 dynamischen Auftrieb erzeugt. Für die Landung ist noch ein Fahrwerk 3 vorgesehen.

Figur 2 zeigt das bevorzugte Ausführungsbeispiel eines erfindungsgemäßen segmentierten Luftfahrzeugs mit Energiemedium von oben mit angebrachten Flügeln 7 und einem Deltaflügel 8 unter dem Kopfsegment 10 des Luftfahrzeugs, welche den dynamischen Auftrieb verstärken. Die Flügel 7 und der Deltaflügel 8 sind wahlweise abtrennbar. Am Heckteil 9 des Fahrzeugs kann der Fachmann wahlweise ein Banner 6 anbringen, um eine verbesserte Lagestabilität des Fahrzeugs zu erreichen.

## Patentansprüche

1. Luftfahrzeug mit innen liegenden Gaszellen, mit diese umgebenden, außen liegenden Luftzellen und mit einer die Gas- und Luftzellen einschließenden flexiblen Außenhülle, **dadurch gekennzeichnet,**
**dass** die miteinander verbundenen, außen liegenden Luftzellen (1; 11 - 14) und die miteinander verbundenen und ein durchgehendes Volumen bildenden innen liegenden Gaszellen (2; 21- 24) durch Einschnürung gebildete Schotten (15 - 17) der Luftzellen (1; 11 - 14) und durch gegenüberliegend angebrachte einschnürbare Schotten (25 - 27) der Gaszellen (2; 21 - 24) als Segmente (10) ausgebildet sind.

2. Luftfahrzeug nach Anspruch 1, **dadurch gekennzeichnet, dass** die Segmente (10) der innen liegenden Gaszellen (2; 21- 24) durch die verschließbaren und zu öffnenden, einschnürbaren Schotten (25 - 27) voneinander trennbar sind.

3. Luftfahrzeug nach Anspruch 1 oder 2, **dadurch gekennzeichnet, dass** der Antrieb (4) unter dem kopfseitigen Segment (10) angeordnet ist
und mindestens einen exzentrisch angebrachten Schuberzeuger, wie z.B. ein Propellerpaar, antreibt.

4. Luftfahrzeug nach einem der Ansprüche 1 bis 3, **dadurch gekennzeichnet, dass** die innen liegenden Gaszellen (2; 21 - 24) mit einem Kraftgas als Energiemedium zur Versorgung von mindestens einem an mindestens einem der Segmente (10) angebrachten Antrieb (4) mit Energie gefüllt sind.

5. Luftfahrzeug nach einem der Ansprüche 1 bis 3, **dadurch gekennzeichnet, dass** das Volumen der Gaszellen (2; 21 - 24) mit einem gasförmigen, etwa luftschweren Energiemedium füllbar ist.

6. Luftfahrzeug nach einem der Ansprüche 1 bis 3, **dadurch gekennzeichnet, dass** das Volumen der Gaszellen (2; 21 - 24) mit Luft füllbar ist.

7. Luftfahrzeug nach einem der Ansprüche 1 bis 3, **dadurch gekennzeichnet, dass** das Volumen der Gaszellen (2; 21 - 24) teils mit einem Kraftgas als Energiemedium und/oder teils mit einem Auftriebsgas leichter als Luft und/oder Luft füllbar ist.

8. Luftfahrzeug nach einem der Ansprüche 1 bis 7, **dadurch gekennzeichnet, dass** durch die unter Druck stehende Außenhülle (28) und/oder durch mindestens ein, unter und/oder über mindestens einem der Segmente (10) angebrachte Flügel (7), einzeln oder paarweise, und durch den Schub (P1, P2) von Schuberzeugern ein dynamischer Auftrieb erzeugbar ist.

9. Luftfahrzeug nach einem der Ansprüche 1 bis 8, **dadurch gekennzeichnet, dass** unter und/oder über mindestens einem der Segmente (10; 2; 21 - 24) exzentrische Antriebselemente (4) angebracht sind, deren Treibstoff das gasförmige Energiemedium in den inneren Gaszellen (2; 21 - 24) und/oder das in Tanks untergebrachte handelsübliche, flüssige und/oder feste Energiemedium ist.

## Claims

1. An aircraft with internal gas cells, with external air cells enveloping the latter, and with an outer sheath that encloses the gas and air cells,
**characterized in that**
the interconnected air cells (1; 11-14) lying on the outside and interconnected gas cells (2; 21-24) lying on the inside and forming a continuous volume are designed as segments (10) by bulkhead (15-17) of the air cells (1; 11-14) formed by constriction and by oppositely secured constrictable bulkhead (25-27) of the gas cells (2; 21-24).

2. The aircraft according to claim 1, **characterized in that** the segments (10) of the internal gas cells (2; 21-24) can be separated from each other by the sealable, constrictable bulkheads (25-27) that are to be opened.

3. The aircraft according to claim 1 or 2, **characterized in that** the drive (4) is arranged under the top segment (10), and drives at least one eccentrically secured thrust generator, e.g., a propeller pair.

4. The aircraft according to one of claims 1 to 3, **characterized in that** the internal gas cells (2; 21-24) are filled with a power gas as the energy medium for supplying energy to at least one drive (4) secured to at least one of the segments (10).

5. The aircraft according to one of claims 1 to 3, **characterized in that** the volume of the gas cells (2; 21-24) can be filled with a gaseous energy medium, having roughly the weight of air.

6. The aircraft according to one of claims 1 to 3, **characterized in that** the volume of the gas cells (2; 21-24) can be filled with air.

7. The aircraft according to one of claims 1 to 3, **characterized in that** the volume of the gas cells (2; 21-24) can be filled partially with a power gas as the energy medium and/or partially with a lifting gas that is lighter than air and/or air.

8. The aircraft according to one of claims 1 to 7, **characterized in that** a dynamic lift can be generated by the pressurized outer sheath (28) and/or by at least one wing (7) attached under and/or over at least one of the segments (10), individually or paired, and by the thrust (P1, P2) produced by thrust generators.

9. The aircraft according to one of claims 1 to 8, **characterized in that** eccentric drive elements (4) are arranged under and/or over at least one of the segments (10; 2; 21-24), whose fuel is the gaseous energy medium in the internal gas cells (2; 21-24) and/or the commercially available, liquid and/or solid energy medium accommodated in tanks.

## Revendications

1. Aéronef comprenant des cellules de gaz intérieures, comprenant des cellules d'air extérieures entourant celles-ci et comprenant une enveloppe extérieure flexible contenant les cellules de gaz et d'air,
**caractérisé en ce que**
les cellules d'air extérieures (1 ; 11 - 14) reliées entre elles et les cellulles de gaz intérieures (2 ; 21 - 24) formant un volume traversant sont formées en tant que segments (10) par liaison de cloisons (15 - 17) des cellules d'air (1 ; 11 - 14) et par des cloisons (25 - 27) des cellules de gaz (2 ; 21 - 24), pouvant être liées et placées à l'opposé.

2. Aéronef selon la revendication 1, **caractérisé en ce que** les segments (10) des cellulles de gaz (2 ; 21 - 24) intérieures peuvent être séparées les unes des autres par les cloisons (25 - 27) pouvant être liées, pouvant être fermées et à ouvrir.

3. Aéronef selon l'une des revendications 1 ou 2, **caractérisé en ce que** l'entraînement (4) est disposé sous le segment (10) côté tête et entraîne au moins un générateur de poussée placé de manière excentrique, comme une paire d'hélices par exemple.

4. Aéronef selon l'une des revendications 1 à 3, **caractérisé en ce que** les cellules de gaz intérieures (2 ; 21 - 24) sont remplies d'énergie avec un gaz combustible en tant qu'agent d'energie pour alimenter au moins un entraînement (4) placé sur au moins un des segments (10).

5. Aéronef selon l'une des revendications 1 à 3, **caractérisé en ce que** le volume des cellules de gaz (2 ; 21 - 24) peut être rempli avec un agent d'énergie gazeux, environ plus lourd que l'air.

6. Aéronef selon l'une des revendications 1 à 3, **caractérisé en ce que** le volume des cellules de gaz (2 ; 21 - 24) peut être rempli avec de l'air.

7. Aéronef selon l'une des revendications 1 à 3, **caractérisé en ce que** le volume des cellules de gaz (2 ; 21 - 24) peut être rempli en partie avec un combustible en tant qu'agent d'énergie et/ou en partie avec un gaz de poussée verticale plus léger que l'air et/ou de l'air.

8. Aéronef selon l'une des revendications 1 à 7, **caractérisé en ce que** du fait de l'enveloppe extérieure (28) sous pression et/ou par au moins une aile (7) placée en-dessous et/ou au-dessus d'au moins un des segments (10), individuellement ou par paires, et du fait de la poussée (P1, P2) des générateurs de poussée, une poussée verticale dynamique peut être produite.

9. Aéronef selon l'une des revendications 1 à 8, **caractérisé en ce qu'**en-dessous et/ou au-dessus d'au moins un des segments (10 ; 2 ; 21 - 24), des éléments d'entraînement excentriques (4) sont placés, dont le carburant est l'agent d'énergie gazeux dans les cellules de gaz intérieures (2; 21 - 24) et/ou l'agent d'énergie liquide et/ou solide généralement placé dans des réservoirs dans le commerce.
